# EUROPEAN PATENT SPECIFICATION

(11) **EP 3 401 120 B1**
(45) Date of publication and mention of the grant of the patent: **06.07.2022**
(21) Application number: 18170516.1
(22) Date of filing: 03.05.2018
(51) Int. Cl.: B60B 33/00

(54) **ROLLER**
ROLLE
ROULETTE

(30) Priority: 12.05.2017 CN 201710335884
(43) Date of publication of application: 14.11.2018
(73) Proprietor: ACCEXIT, 59000 Lille (FR)
(72) Inventor: XIANGJIE, LIU, Guangzhou, 510000 (CN)
(74) Representative: Ipside

(56) References cited:
- EP-A1- 0 645 262
- EP-A2- 1 918 127
- DE-C1- 19 504 074
- US-A- 4 077 088
- US-A1- 2014 250 628
- US-A1- 2015 258 850

## Description

### Technical Field

The invention relates to the field of axles, and in particular to a roller.

### Background Art

In the prior art, rollers used on mobile bases or transfer bases for suitcases, work benches, seats, trolleys or movable instruments include single rollers and bilateral rollers, with a connecting shaft passing through the middle part thereof, an outer cover being provided at either end of the connecting shaft, and a gap being provided between the outer cover and the roller to ensure the high efficiency of the rotation of the roller. However, in a place such as a hairdressing shop or a textile room, it is often found that the gap between the outer cover and the roller is entangled with hairs or cotton threads. Such entanglement is very difficult to clean and remove, and after long-term accumulation, since the gap is filled up, the roller is easy to show delayed rolling, which is very inconvenient in practice. Known examples of rollers are provided by EP1918127A2 and DE19504074C1.

### Summary of the Invention

The invention provides a roller, which solves the problem in the prior art that the roller gap is easy to catch hairs, debris and other wastes.

The technical solution of the present invention is achieved as follows:a roller, comprising a support frame, the support frame comprising a vertical support wall, mounting positions being symmetrically arranged on two sides of the vertical support wall, two single wheels being symmetrically arranged on the mounting positions on the two sides of the support wall, an inner surface of the single wheel being provided with an annular mounting groove, an annular outer ring cover being arranged on the mounting positions on the two sides of the support frame, the outer ring cover being inserted into the annular mounting groove, and a gap being provided between a side wall of the outer ring cover and a side wall of the annular mounting groove.

As a preferred solution of the present invention, the middle part of the mounting position is provided with a through hole, the through hole is arranged in the center of the outer ring cover, a connecting shaft passes through the through hole, and two ends of the connecting shaft are symmetrically inserted at the centers of the left and right single wheels.

As another preferred solution of the present invention, an inner side surface of the single wheel is provided with an inner ring cover, the outer diameter of the inner ring cover is shorter than the inner diameter of the outer ring cover, the inner ring cover is arranged in a circular groove on the inner side of the single wheel, the outer wall of the inner ring cover constitutes the annular mounting groove with the inner wall of the circular groove and the bottom surface of the circular groove, and the annular mounting groove is an inner wheel groove.

As an embodiment of the present invention, the inner ring cover is of a thin-walled structure, a convex hollow connection shaft mounting base is arranged at the middle part of the circular groove, and second reinforcing ribs are arranged in a circumferential array between the connecting shaft mounting base and the inner wall of the inner ring cover.

As another preferred solution of the present invention, the outer ring cover is of a thin-walled structure, the outer ring cover forms a groove with a support wall, and an outwardly protruding hollow mounting base is provided at the center of the groove, with the height of the mounting base being lower than the height of the outer ring cover.

As a preferred solution of the present invention, first reinforcing ribs are arranged in a circumferential array between an outer wall of the mounting base and an inner wall of the outer ring cover, with the height of the first reinforcing ribs being lower than the height of the outer ring cover.

As a preferred solution of the present invention, the single wheel comprises an inner side surface, an outer wheel surface and a ground touch surface, with the maximum outer diameter of the top view projection of the single wheel being greater than the outer diameter of the outer ring cover.

As a preferred solution of the present invention, the side view projection of the ground touch surface is one of a straight-line segment or a circular arc segment.

As a preferred solution of the present invention, the support frame further comprises a connecting frame that engages with a vertical support wall, the vertical support wall is arranged at the lower middle part of the side wall of the connecting frame, and the side wall of the connecting frame extends to form a protective cover that is concentric with the two single wheels and surrounds the outer sides of the two single wheels, the width of the protective cover being greater than the width of the outer ring cover, the vertical height of the lower edge of the protective cover from the ground being A, and the maximum diameter of the top view projection of the single wheel being B, wherein 3/5B ≤ A ≤ B.

As a preferred solution of the present invention, the top surface of the connecting frame is provided with a support shaft mounting base, and a support shaft, which is connected to a main body part at which the roller is to be provided, is mounted in the support shaft mounting base.

### Technical Effects:

The present invention provides a roller, comprising a support frame, the support frame comprising a vertical support wall, mounting positions being symmetrically arranged on two sides of the vertical support wall, and two single wheels being symmetrically arranged on the mounting positions on the two sides of the support wall, characterized in that an inner surface of the single wheel is provided with an annular mounting groove, an annular outer ring cover is arranged on the mounting positions on the two sides of the support frame, the outer ring cover is inserted into the annular mounting groove, and a gap is provided between a side wall of the outer ring cover and a side wall of the annular mounting groove. With the structure of the plug connection between the outer ring cover and the single wheels, the present application completely prevents the connecting shaft from being entangled with hairs or debris so as to ensure the cleanliness and high-speed rotation of the roller.

### Brief Description of the Drawings

In order to describe the technical solutions in embodiments of the present invention or the prior art more clearly, the figures to be used in the description of the embodiments or the prior art will be simply introduced below. Apparently, the accompanying drawings in the following description show merely some embodiments of the present invention, and a person of ordinary skill in the art may still derive other drawings from these accompanying drawings without creative efforts.

### Figures

Fig. 1 is a structural perspective schematic diagram of the present invention;
Fig. 2 is a structural schematic diagram of a front sectional view of the present invention;
Fig. 3 is a structural exploded schematic diagram of the present invention.

In the figures: the support frame 1, the outer ring cover 11, the protective cover 12, the first reinforcing rib 13, the connecting frame 14, the support shaft mounting base 15, the single wheel 2, the outer wheel surface 21, the inner wheel groove 22, the inner ring cover 23, the connecting shaft mounting base 24, the second reinforcing rib 25, the support shaft 3, and the connecting shaft 4.

### Detailed Description of Embodiments

The following clearly and completely describes the technical solutions in the embodiments of the invention with reference to the accompanying drawings in the embodiments of the invention. Apparently, the described embodiments are merely a part rather than all of the embodiments of the invention. All other examples obtained by a person skilled in the art based on the embodiment of the present invention without making any inventive effort all fall within the scope of protection of the present invention.

### Example 1

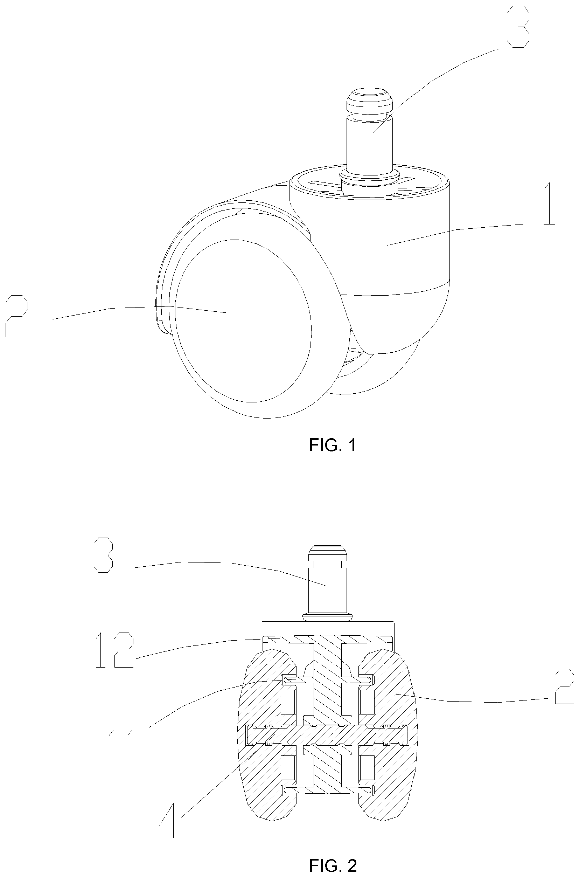

Fig. 1 shows a roller, comprising a support frame 1, the support frame 1 comprising a vertical support wall, mounting positions being symmetrically arranged on two sides of the vertical support wall, two single wheels 2 being symmetrically arranged on the mounting positions on the two sides of the support wall, an inner surface of the single wheel 2 being provided with an annular mounting groove of a recessed structure, an annular outer ring cover 11 being arranged on the mounting positions on the two sides of the support frame 1, the outer ring cover 11 being inserted into the annular mounting groove, and a gap being provided between a side wall of the outer ring cover 11 and a side wall of the annular mounting groove.

As shown in Fig. 2, the cross-sectional projection of the front view of the side wall of the outer ring cover can be linear or arc-shaped, and the cross-sectional projection line of the side wall of the outer ring cover is parallel to the cross-sectional projection line of the side wall of the mounting groove.

The middle part of the mounting position is provided with a through hole, the through hole is arranged in the center of the outer ring cover 11, a connecting shaft 4 passes through the through hole, and two ends of the connecting shaft 4 are symmetrically inserted at the centers of the left and right single wheels 2.

An inner side surface of the single wheel 2 is provided with an inner ring cover 23, the outer diameter of the inner ring cover is shorter than the inner diameter of the outer ring cover, the inner ring cover 23 is arranged in a circular groove on the inner side of the single wheel 2, the outer wall of the inner ring cover 23 constitutes the annular mounting groove with the inner wall of the circular groove and the bottom surface of the circular groove, and the annular mounting groove is an inner wheel groove 22. The upper plane of the inner ring cover 23 is equal to or higher than the average height of the inner surface of the single wheel, and the inner ring cover 23 is inserted into the ring of the outer ring cover 11.

The inner ring cover 23 is of a thin-walled structure, a convex hollow connection shaft mounting base 24 is arranged at the middle part of the circular groove, and second reinforcing ribs 25 are arranged in a circumferential array between the connecting shaft mounting base 24 and the inner wall of the inner ring cover 23.

The outer ring cover 11 is of a thin-walled structure, the outer ring cover 11 forms a groove with a support wall, and an outwardly protruding hollow mounting base is provided at the center of the groove, with the height of the mounting base being lower than the height of the outer ring cover 11. The position of the outer surface of the mounting base does not exceed the position of the inner side surface of the inner ring cover when the inner ring cover 23 is engaged. A gap is provided between the outer surface of the mounting base and the inner side surface of the inner ring cover.

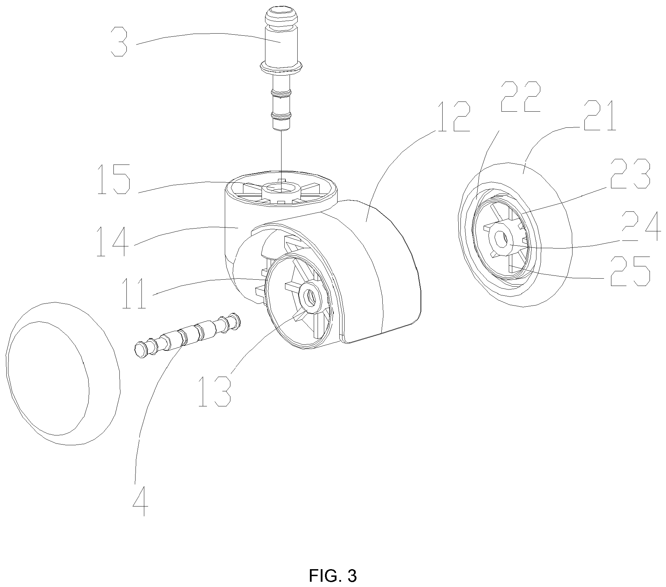

As shown in Fig. 3, first reinforcing ribs 13 are arranged in a circumferential array between an outer wall of the mounting base and an inner wall of the outer ring cover 11, with the height of the first reinforcing ribs being lower than the height of the outer ring cover 11.

The single wheel 2 comprises an inner side surface, an outer wheel surface 21 and a ground touch surface, with the maximum outer diameter of the top view projection of the single wheel being greater than the outer diameter of the outer ring cover 11.

The side view projection of the ground touch surface is one of a straight-line segment or a circular arc segment. The contact between the single wheel and the ground is line contact or point contact.

The support frame 1 further comprises a connecting frame 14 that engages with a vertical support wall, the vertical support wall is arranged at the lower middle part of the side wall of the connecting frame 14, and the side wall of the connecting frame 14 extends to form a protective cover 12 that is concentric with the two single wheels and surrounds the outer sides of the two single wheels 2, the width of the protective cover 12 being greater than the width of the outer ring cover 11.

The top surface of the connecting frame 14 is provided with a support shaft mounting base 15, and a support shaft 3, which is connected to a main body part at which the roller is to be provided, is mounted in the support shaft mounting base 15.

This product is mainly used on a mobile base for a suitcase, a work bench, a seat, a trolley or a movable instrument.

## Claims

1. A roller, comprising a support frame (1), the support frame (1) comprising a vertical support wall, mounting positions being symmetrically arranged on two sides of the vertical support wall, and two single wheels (2) being symmetrically arranged on the mounting positions on the two sides of the support wall, **characterized in that** an inner surface of the single wheel (2) is provided with an annular mounting groove, an annular outer ring cover (11) is arranged on the mounting positions on the two sides of the support frame (1), the outer ring cover (11) is inserted into the annular mounting groove, and a gap is provided between a side wall of the outer ring cover (11) and a side wall of the annular mounting groove.

2. The roller according to claim 1, **characterized in that** the middle part of the mounting position is provided with a through hole, the through hole is arranged in the center of the outer ring cover (11), a connecting shaft (4) passes through the through hole, and two ends of the connecting shaft (4) are symmetrically inserted at the centers of the left and right single wheels (2).

3. The roller according to claim 1, **characterized in that** an inner side surface of the single wheel (2) is provided with an inner ring cover (23), the outer diameter of the inner ring cover is shorter than the inner diameter of the outer ring cover, the inner ring cover (23) is arranged in a circular groove on the inner side of the single wheel (2), the outer wall of the inner ring cover (23) constitutes the annular mounting groove with the inner wall of the circular groove and the bottom surface of the circular groove, and the annular mounting groove is an inner wheel groove (22).

4. The roller according to claim 3, **characterized in that** the inner ring cover (23) is of a thin-walled structure, a convex hollow connection shaft mounting base (24) is arranged at the middle part of the circular groove, and second reinforcing ribs (25) are arranged in a circumferential array between the connecting shaft mounting base (24) and the inner wall of the inner ring cover (23).

5. The roller according to claim 2, **characterized in that** the outer ring cover (11) is of a thin-walled structure, the outer ring cover (11) forms a groove with a support wall, and an outwardly protruding hollow mounting base is provided at the center of the groove, with the height of the mounting base being lower than the height of the outer ring cover (11).

6. The roller according to claim 5, **characterized in that** first reinforcing ribs (13) are arranged in a circumferential array between an outer wall of the mounting base and an inner wall of the outer ring cover (11), with the height of the first reinforcing ribs being lower than the height of the outer ring cover (11).

7. The roller according to claim 1, **characterized in that** the single wheel (2) comprises an inner side surface, an outer wheel surface (21) and a ground touch surface, with the maximum outer diameter of the top view projection of the single wheel being greater than the outer diameter of the outer ring cover (11).

8. The roller according to claim 7, **characterized in that** the side view projection of the ground touch surface is one of a straight-line segment or a circular arc segment.

9. The roller according to claim 1, **characterized in that** the support frame (1) further comprises a connecting frame (14) that engages with a vertical support wall, the vertical support wall is arranged at the lower middle part of the side wall of the connecting frame (14), and the side wall of the connecting frame (14) extends to form a protective cover (12) that is concentric with the two single wheels and surrounds the outer sides of the two single wheels (2), the width of the protective cover (12) being greater than the width of the outer ring cover (11).

10. The roller according to claim 9, **characterized in that** the top surface of the connecting frame (14) is provided with a support shaft mounting base (15), and a support shaft (3), which is connected to a main body part at which the roller is to be provided, is mounted in the support shaft mounting base (15).

## Patentansprüche

1. Rolle, die einen Stützrahmen (1) umfasst, wobei der Stützrahmen (1) eine vertikale Stützwand, Befestigungspositionen, die symmetrisch auf zwei Seiten der vertikalen Stützwand angeordnet sind, und zwei Einzelräder (2), die symmetrisch an den Befestigungspositionen auf den beiden Seiten der Stützwand angeordnet sind, umfasst, **dadurch gekennzeichnet, dass** eine Innenfläche des Einzelrades (2) mit einer ringförmigen Befestigungsnut versehen ist, eine ringförmige Außenringabdeckung (11) an den Befestigungspositionen auf den beiden Seiten des Stützrahmens (1) angeordnet ist, die Außenringabdeckung (11) in die ringförmige Befestigungsnut eingesetzt ist und ein Spalt zwischen einer Seitenwand der Außenringabdeckung (11) und einer Seitenwand der ringförmigen Befestigungsnut bereitgestellt ist.

2. Rolle nach Anspruch 1, **dadurch gekennzeichnet, dass** der mittlere Teil der Befestigungsposition mit einem Durchgangsloch versehen ist, wobei das Durchgangsloch in der Mitte der Außenringabdeckung (11) angeordnet ist, eine Verbindungswelle (4) durch das Durchgangsloch läuft und zwei Enden der Verbindungswelle (4) symmetrisch in der Mitte des linken und rechten Einzelrades (2) eingesetzt sind.

3. Rolle nach Anspruch 1, **dadurch gekennzeichnet, dass** eine innere Seitenfläche des Einzelrades (2) mit einer Innenringabdeckung (23) versehen ist, der Außendurchmesser der Innenringabdeckung kürzer ist als der Innendurchmesser der Außenringabdeckung, die Innenringabdeckung (23) in einer kreisförmigen Nut an der Innenseite des Einzelrades (2) angeordnet ist, die Außenwand der Innenringabdeckung (23) die ringförmige Befestigungsnut mit der Innenwand der kreisförmigen Nut und der unteren Oberfläche der kreisförmigen Nut bildet und die ringförmige Befestigungsnut eine innere Radnut (22) ist.

4. Rolle nach Anspruch 3, **dadurch gekennzeichnet, dass** die Innenringabdeckung (23) eine dünnwandige Struktur aufweist, eine konvexe hohle Verbindungswellenbefestigungsbasis (24) am mittleren Teil der kreisförmigen Nut angeordnet ist und zweite Verstärkungsrippen (25) in einer umlaufenden Anordnung zwischen der Verbindungswellenbefestigungsbasis (24) und der Innenwand der Innenringabdeckung (23) angeordnet sind.

5. Rolle nach Anspruch 2, **dadurch gekennzeichnet, dass** die Außenringabdeckung (11) eine dünnwandige Struktur aufweist, die Außenringabdeckung (11) eine Nut mit einer Stützwand bildet und eine nach außen vorstehende hohle Befestigungsbasis in der Mitte der Nut bereitgestellt ist, wobei die Höhe der Befestigungsbasis geringer ist als die Höhe der Außenringabdeckung (11).

6. Rolle nach Anspruch 5, **dadurch gekennzeichnet, dass** erste Verstärkungsrippen (13) in einer umlaufenden Anordnung zwischen einer Außenwand der Befestigungsbasis und einer Innenwand der Außenringabdeckung (11) angeordnet sind, wobei die Höhe der ersten Verstärkungsrippen geringer ist als die Höhe der Außenringabdeckung (11).

7. Rolle nach Anspruch 1, **dadurch gekennzeichnet, dass** das Einzelrad (2) eine innere Seitenfläche, eine äußere Radfläche (21) und eine Bodenberührungsfläche umfasst, wobei der maximale Außendurchmesser der Draufsichtprojektion des Einzelrades größer ist als der Außendurchmesser der Außenringabdeckung (11).

8. Rolle nach Anspruch 7, **dadurch gekennzeichnet, dass** die Seitenansichtsprojektion der Bodenberührungsfläche eines aus einem geradlinigen Segment oder einem Kreisbogensegment ist.

9. Rolle nach Anspruch 1, **dadurch gekennzeichnet, dass** der Stützrahmen (1) ferner einen Verbindungsrahmen (14) umfasst, der in eine vertikale Stützwand eingreift, die vertikale Stützwand am unteren mittleren Teil der Seitenwand des Verbindungsrahmens (14) angeordnet ist und sich die Seitenwand des Verbindungsrahmens (14) derart erstreckt, dass sie eine Schutzabdeckung (12) bildet, die mit den beiden Einzelrädern konzentrisch ist und die Außenseiten der beiden Einzelräder (2) umgibt, wobei die Breite der Schutzabdeckung (12) größer ist als die Breite der Außenringabdeckung (11).

10. Rolle nach Anspruch 9, **dadurch gekennzeichnet, dass** die obere Oberfläche des Verbindungsrahmens (14) mit einer Stützwellenbefestigungsbasis (15) versehen ist und eine Stützwelle (3), die mit einem Hauptkörperteil verbunden ist, an dem die Rolle bereitgestellt werden soll, in der Stützwellenbefestigungsbasis (15) befestigt ist.

## Revendications

1. Roulette, comprenant un cadre de support (1), le cadre de support (1) comprenant une paroi de support verticale, des positions de montage étant disposées symétriquement sur deux côtés de la paroi de support verticale, et deux roues uniques (2) étant disposées symétriquement aux positions de montage sur les deux côtés de la paroi de support, **caractérisée en ce qu'**une surface intérieure de la roue unique (2) est pourvue d'une rainure de montage annulaire, un recouvrement d'anneau extérieur annulaire (11) est disposé aux positions de montage sur les deux côtés du cadre de support (1), le recouvrement d'anneau extérieur (11) est inséré dans la rainure de montage annulaire, et un espacement est prévu entre une paroi latérale du recouvrement d'anneau extérieur (11) et une paroi latérale de la rainure de montage annulaire.

2. Roulette selon la revendication 1, **caractérisée en ce que** la partie centrale de la position de montage est pourvue d'un orifice traversant, l'orifice traversant est disposé au centre du recouvrement d'anneau extérieur (11), un arbre de liaison (4) passe à travers l'orifice traversant, et deux extrémités de l'arbre de liaison (4) sont insérées symétriquement par rapport aux centres des roues uniques gauche et droite (2).

3. Roulette selon la revendication 1, **caractérisée en ce qu'**une surface latérale intérieure de la roue unique (2) est pourvue d'un recouvrement d'anneau intérieur (23), le diamètre extérieur du recouvrement d'anneau intérieur est inférieur au diamètre intérieur du recouvrement d'anneau extérieur, le recouvrement d'anneau intérieur (23) est disposé dans une rainure circulaire sur le côté intérieur de la roue unique (2), la paroi extérieure du recouvrement d'anneau intérieur (23) constitue la rainure de montage annulaire avec la paroi intérieure de la rainure circulaire et la surface inférieure de la rainure circulaire, et la rainure de montage annulaire est une rainure de roue intérieure (22).

4. Roulette selon la revendication 3, **caractérisée en ce que** le recouvrement d'anneau intérieur (23) est formé d'une structure à paroi mince, une base creuse convexe de montage d'arbre de liaison (24) est disposé au niveau de la partie centrale de la rainure circulaire, et des secondes nervures de renforcement (25) sont disposées dans un réseau circonférentiel entre la base de montage d'arbre de liaison (24) et la paroi intérieure du recouvrement d'anneau intérieur (23).

5. Roulette selon la revendication 2, **caractérisée en ce que** le recouvrement d'anneau extérieur (11) est formé d'une structure à paroi mince, le recouvrement d'anneau extérieur (11) forme une rainure avec une paroi de support, et une base de montage creuse saillante vers l'extérieur est prévue au centre de la rainure, la hauteur de la base de montage étant inférieure à la hauteur du recouvrement d'anneau extérieur (11).

6. Roulette selon la revendication 5, **caractérisée en ce que** des premières nervures de renforcement (13) sont disposées dans un réseau circonférentiel entre une paroi extérieure de la base de montage et une paroi intérieure du recouvrement d'anneau extérieur (11), la hauteur des premières nervures de renforcement étant inférieure à la hauteur du recouvrement d'anneau extérieur (11).

7. Roulette selon la revendication 1, **caractérisée en ce que** la roue unique (2) comprend une surface latérale intérieure, une surface de roue extérieure (21) et une surface de contact au sol, le diamètre extérieur maximal de la projection en vue de dessus de la roue unique étant supérieur au diamètre extérieur du recouvrement d'anneau extérieur (11).

8. Roulette selon la revendication 7, **caractérisée en ce que** la projection en vue de dessus de la surface de contact au sol est l'un parmi un segment en ligne droite ou un segment en arc de cercle.

9. Roulette selon la revendication 1, **caractérisée en ce que** le cadre de support (1) comprend en outre un cadre de liaison (14) qui s'engage avec une paroi de support verticale, la paroi de support verticale est disposée au niveau de la partie centrale inférieure de la paroi latérale du cadre de liaison (14), et la paroi latérale du cadre de liaison (14) s'étend pour former un recouvrement de protection (12) qui est concentrique avec les deux roues uniques et entoure les côtés extérieurs des deux roues uniques (2), la largeur du recouvrement de protection (12) étant supérieure à la largeur du recouvrement d'anneau extérieur (11).

10. Roulette selon la revendication 9, **caractérisée en ce que** la surface supérieure du cadre de liaison (14) est pourvue d'une base de montage d'arbre de support (15), et un arbre de support (3), qui est relié à une partie de corps principale à laquelle la roulette doit être reliée, est monté dans la base de montage d'arbre de support (15).
